# EUROPEAN PATENT APPLICATION

(11) **EP 1 642 507 A1**
(43) Date of publication of application: **05.04.2006**
(21) Application number: 05076993.4
(22) Date of filing: 31.08.2005
(51) Int. Cl.: A23L 1/317, A23L 1/314, A23D 9/00, A23D 9/007

(54) **Fermented meat products containing interesterified vegetable fat and dairy protein**

(30) Priority: 04.10.2004 EP 04077747
(71) Applicant: UNILEVER N.V., 3013 AL Rotterdam (NL); UNILEVER PLC, London EC4P 4BQ (GB)
(72) Inventor: Fritsche, Jan Unilever Bestfoods Deutschland GmbH, 91522 Ansbach (DE); Reil, Stefan Unilever Bestfoods Deutschland GmbH, 91522 Ansbach (DE)
(74) Representative: Wurfbain, Gilles L.

(57) **Abstract**

Fermented meat products containing a certain amount fat. More particular, the fat comprises vegetable fat which is interesterified vegetable fat. The fermented meat product further comprises milk or diary protein.

## Description

The present invention relates to fermented meat products containing a certain amount fat. More particular, the fat is a vegetable fat which is interesterified vegetable fat. The fermented meat product further comprises milk or diary protein.

Fermented meat products are known for a long time. Particular popular in a wide number of countries are meat products that contain ground meat, which is put in a casing and fermented (artificially or naturally) to give fermented meat products like salami and similar type of sausages.

Although such meat products are liked by a large group of consumers, such products contain a fairly large amount of animal fat, due to the ingredients traditionally used. There is a demand for healthier fermented meat products.
I. Javidipour and H. Vural, in: Nahrung/Food 46, No 6, pp 404-407, (2002) disclose sausages with reduced fat/altered fatty acid profile are prepared, whereby the vegetable fat used is an interesterified vegetable fat. Also, they give an example, in which a sausages is prepared having the following composition:
   75% beef meat
   17% interesterified vegetable oil
   1% sodium caseinate.
   The sausages are not fermented sausages.

H Vural in: Europ. Food Research and Technology, 217 (2), pp 100-103, (2003) discloses fermented sausages in which part of the fat has been replaced by interesterified vegetable oil. The fermentation is carried out by inoculation with a starter culture and fermenting for 2-5 days.

H Vural, I Javidipour in: Eur. Food Res. Techn. 214(6), pp 465-468, (2002) disclose the use of 10% interesterified vegetable oil and 0.6% sodium caseinate in smoked frankfurters.

US patent 5,238,701 discloses heating (not interesterified) vegetable oil and dispersing therein milk proteins and adding boiling water. The resulting product upon cooling is a solid mass, for use as a replacer of solid animal fat in various types of sausages and meat products.

DE patent 2639177 discloses more healthy meat products (boiled sausages) containing a reduced content of fat, containing vegetable oils, lean meat and milk protein.

It has been found that the use of interesterified fat in fermented meat products instead of part of the animal fat in otherwise conventional fermented sausages leads to problems. More in particular, when making thin fermented sausages (e.g. below diameter 4, but even more so below 2.5 cm diameter) it was found the use of fatblends of part interesterified fat and part vegetable oil lead in fermenetd sausages to what can be described in German language as "Ausoelen": a layer of liquid oil being formed between the meat and the casing wall. The fact that this "Ausoelen" occurs more with thin sausages than with thick sausages is probably due to higher pressures being present, e.g. upon filling the casing. Needless to say, the "Ausoelen" will be unacceptable for good products. "Ausoelen" may be due to breaking of the emulsion of meat products and separation of the oil, as has been described in US 4,262,027 and DE 4004865.

It has also been found that the simple use of a considerable amount of (poly) unsaturated fatty acid fats in fermented sausages can lead to increased tendency to rancidity, which is undesired.

Hence, there is a need for healthier fermented meat products (e.g. sausages of the salami type). Such products should show a low tendency to "Ausoelen", and still have an acceptable flavour, in particular a suppression of flavour associated with rancidity. The manufacturing process should preferably be as close as possible to conventional fermented sausage making, in order to keep investment low.

It has now been found such may be achieved (at least in part) by a fermented meat product comprising:
- 50-95% meat
- 0.1-10% milk protein
- 5-30% vegetable fat
wherein the vegetable fat comprises 5-100% interesterified vegetable fat.

Preferably, the amount of interesterified fat on total vegetable fat is between 15-60%, more preferably between 20 and 50%.

As the meat product according to the invention is a fermented product, the product will be acidic due to lactic acid having been produced or added. Hence, it is preferred the fermented meat product according to the invention has a pH of below 6.0, preferably below 5.5.

In the formulations according to the invention it is preferred that the meat comprises at least 50% pork meat, and most preferably substantially all of the meat used is pork meat. The meat used preferably has a fat content of less than 10% wt.

Surprisingly, it was found by the inventors that the acidic taste (which fermented sausages have due to lactic acid formation) was less harsh for fermented sausages according to the invention, when compared to prior art sausages. It was also found that rancidity is less present or less noted in the fermented sausages according to the invention when compared to prior art sausages that have (poly)unsaturated fatty acid fats.

The total fat content of the fermented meat product according to the present invention is preferably less than 40% wt, based on the total fermented meat product, more preferably less than 30% wt, based on the total fermented meat product. Next to interesterified fat other vegetable fats may also be used, such as liquid oil or a phytosterol.

Phytosterols herein, also known as plant sterols or vegetable sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188. The respective 5a- saturated derivatives such as sitostanol campesterol, campestanol, stigmasterol, brassicasterol, brassicastanol or a mixture thereof. The phytosterols in this preferred embodiment are preferably esterified with a fatty acid. Preferably the sterols are esterified with one or more C2-22 fatty acids. For the purpose of the invention the term C2-22 fatty acid refers to any molecule comprising a C2-22 main chain and at least one acid group. Although not preferred within the present context the C2-22 main chain may be partially substituted or side chains may be present. Preferably, however the C2-22 fatty acids are linear molecules comprising one or two acid group(s) as end group(s). Most preferred are linear C8-22 fatty acids as occur in natural oils., campestanol and ergostanol and their derivatives are also encompassed in the term phytosterol. Preferably the phytosterol is selected from the group comprising fatty acid ester of β-sitosterol, β-sitostanol, Suitable examples of any such fatty acids are acetic acid, propionic acid, butyric acid, caproic acid, caprylic acid, capric acid. Other suitable acids are for example citric acid, lactic acid, oxalic acid and maleic acid. Most preferred are myristic acid, lauric acid, palmitic acid, stearic acid, arachidic acid, behenic acid, oleic acid, cetoleic acid, erucic acid, elaidic acid, linoleic acid and linolenic acid. When desired a mixture of fatty acids may be used for esterification of the sterols. For example, it is possible to use a naturally occurring fat or oil as a source of the fatty acid and to carry out the esterification via an interesterification reaction. Use of a natural source nearly always results in a mixture of fatty acids. In a particular embodiment, the fatty acid mixture contains a high amount (>50%, preferably >70%, further preferred >80%) of unsaturates, whether monounsaturated fatty acids (MUFA) and/or polyunsaturated fatty acids (PUFA). This does not only provide the advantage of e.g. PUFA itself having good blood cholesterol lowering capacity, but also of the sterols esters prepared with such fatty acids and thus the creamer/whitener/thickener prepared with it. Preferably fatty acid mixtures of sunflower, safflower, rapeseed, linseed, olive oil, linola and/or soybean are used. These are typical sources of high PUFA and/or low SAFA. Suitable esterification conditions are for example described in WO 92/19640.

The milk or dairy proteins used preferably comprise caseinate and/or whey. It is also preferred, e.g. to prevent a cooked off-taste. To use milk proteins which are not heat-denatured (in fact preferably not denatured at all).

As the product according to the invention is a fermented meat product (e.g. of the salami type, depending on the herbs and spices used), lactic acid bacteria will be present. Preferably, the product according to the invention contains at least 10³, preferably at least 10⁵ lactic acid bacteria per gram product

The product can be made to a process along the lines as known in the art for fermented meat products. The vegetable fat and the milk proteins can suitably be added to the ingredients e.g. after initial chopping of the meat, e.g. when starter cultures and/or herbs or spices are added.

### EXAMPLES

Salami sausages were prepared according to the recipes as in table 1 using the following processing.
The pork meat was kept at -18°C until use. Then the meat was minced in a cutter to a particle size of about 2 mm and spices as well as starter cultures were added subsequently. The solid (interesterified) fat and liquid vegetable oil was added to the meat preparation together with the milk protein. The final mixture was carefully chopped for about 1 min. Afterwards, the sausage mixture was stuffed into conventional casings (about 12 mm diameter). Next fermentation (23-24°C) and drying (93-57% rel. humidity) took place in dedicated fermentation chambers for 6-7 days. Finally the products were vacuum packed and stored at 5°C.

**Table 1**

| | Control | Example 1 | Example 2 | Example 3 |
|---|---|---|---|---|
| Ingredients | amount (g) | amount (g) | amount (g) | Amount (g) |
| Frozen porkmeat ("Sauenfleisch I") | 8000 | 8000 | 8000 | 8000 |
| Interesterified fat (frozen, particulate) | 1000 | 1000 | 1000 | 1000 |
| Salted pork meat, frozen ("Schweinefleisch") | 8500 | 8500 | 8500 | 8500 |
| Liquid oil, polyunsaturated | 2100 | 2100 | 2100 | 2100 |
| NPS ("Nitrit Pökelsalz") | 277 | 277 | 277 | 277 |
| Solid whey protein (caseinate) | | 160 | | |
| Solid whey protein | | | 160 | 560 |
| Delta Tocopherol (antioxidant) | | | 25 | 50 |
| Tocopherol acetate (antioxidant) | 50 | 50 | | |
| Mediterranean herbs | 375 | 375 | 375 | 375 |
| Bitec LB 5 (starter culture) | 4 | 4 | 4 | 4 |
| Water | 30 | 30 | 30 | 30 |
| | | | | |
| Total | 20336 | 20496 | 20471 | 20896 |

The products so obtained were as follows:
control:
   salami snack type of product with a caliber of 14 mm and length of about 190 mm. Mild mediterranean flavor with slight acidic aftertaste. Continous film on the outer surface of the product consisting of predominantly fat/oil.

example 1:
   mild salami snack type of product with a caliber of 14 mm and length of about 190 mm. Mild mediterranean flavor with less intense acid aftertaste than control sample. Amount of fat/oil on the outer surface of the product is significantly reduced compared to the control sample.
example 2:
   mild salami snack type of product with a caliber of 14 mm and length of about 190 mm. Mild mediterranean flavor, but intensity of acid aftertaste is less pronounced than control sample. Amount of fat/oil on the outer surface of the product is significantly reduced compared to the control sample.
example 3:
   mild salami snack type of product with a caliber of 14 mm and length of about 190 mm. Mild mediterranean flavor, but intensity of acid aftertaste is less intense than control sample. Amount of fat/oil on the outer surface of the product is significantly reduced compared to the control sample.

All samples including the control showed good firmness and consistency as well as excellent color stability.

## Claims

1. Fermented meat product comprising:
- 50-95% meat
- 0.1-10% milk protein
- 2-30% vegetable fat
wherein the vegetable fat comprises 5-100% interesterified vegetable fat.

2. Fermented meat product according to claim 1, wherein the pH of the fermented meat product is below 6.0.

3. Fermented meat product according to claim 2, wherein the pH of the fermented meat product is below 5.5.

4. Fermented meat product according to claim 1-3, wherein the meat comprises at least 50% pork meat.

5. Fermented meat product according to claim 4, wherein the meat is pork meat.

6. Fermented meat product according to claim 1-5, wherein the meat has a fat content of less than 10% wt.

7. Fermented meat product according to claim 1-6, wherein the fermented meat product has a fat content of less than 40% wt, based on the total fermented meat product.

8. Fermented meat product according to claim 7, wherein the fermented meat product has a fat content of less than 30% wt, based on the total fermented meat product

9. Fermented meat product according to claim 1-8, wherein the milk protein comprises caseinate and/or whey.

10. Fermented meat product according to claim 1-9, wherein the milk protein is not heat-denatured.

11. Fermented meat product according to claim 1-10, containing at least 10³, preferably at least 10⁵ lactic acid bacteria per gram product.

12. Fermented meat product according to claim 1-11, in the form of a sausage of fermented meat in a casing.

13. Fermented meat product according to claim 12, wherein the sausage has a diameter of below 4 cm, preferably below 2.5 cm.

14. Fermented meat product according to claim 1-13, wherein 5-60% of the vegetable fat is a plant sterol, sterol, or fatty acid ester of sterol or plant sterol.
